# EUROPÄISCHE PATENTSCHRIFT

(11) **EP 2 468 153 B1**
(45) Veröffentlichungstag und Bekanntmachung des Hinweises auf die Patenterteilung: **18.06.2014**
(21) Anmeldenummer: 11194442.7
(22) Anmeldetag: 20.12.2011
(51) Int. Cl.: A47J 31/44

(54) **Kaffeemaschine**
Coffee machine
Machine à café

(30) Priorität: 24.12.2010 CN 201020680756 U
(43) Veröffentlichungstag der Anmeldung: 27.06.2012
(73) Patentinhaber: BSH Bosch und Siemens Hausgeräte GmbH, 81739 München (DE)
(72) Erfinder: Almendros Carmona, Ismael, Jesus, 31012 Pamplona (ES); Jiang, Ji, Qixia town 210000 Nanjing, Jiangsu (CN); Zhang, Shurong, 210028 Nanjing, Jiangsu (CN)

(56) Entgegenhaltungen:
- US-A1- 2005 145 112
- US-A1- 2008 282 896
- US-A1- 2009 120 300
- US-B1- 6 357 342

## Beschreibung

### Gebiet der Erfindung

Die vorliegende Erfindung bezieht sich auf eine Kaffeemaschine, insbesondere auf eine Aufnahmestruktur einer Kaffeemaschine für eine Kaffeekanne.

### Technischer Hintergrund

Bisher bekannte Kaffeemaschinen umfassen, wie in der chinesischen Offenlegungsschrift CN201452886 gezeigt ist, ein Gehäuse und eine am Gehäuse angeordnete Abdeckplatte. Diese ist über eine feste Schwenkachse mit dem Gehäuse so verbunden, dass die Abdeckplatte relativ zum Gehäuse bewegbar ist und somit geöffnet oder geschlossen werden kann. Im oberen Bereich innerhalb des Gehäuses befindet sich ein Kaffeemehlbehälter, oberhalb dessen eine mit einem Wasserbehälter verbundene Düse vorhanden ist. Mit dieser Düse kann der Kaffeemehlbehälter mit Heißwasser befüllt werden, um durch Mischung des Wassers mit dem Kaffeemehl Kaffee zu bereiten. Im unteren Bereich des Gehäuses ist ein Aufnahmeraum für die zugehörige Kaffeekanne ausgebildet. Nachdem die Kaffeekanne in den Aufnahmeraum eingesetzt worden ist, wird ein im Bodenbereich des Kaffeemehlbehälters befindliches und aus dem Gehäuse herausragendes Ventil durch den Kopf der Kaffeekanne nach oben gedrückt, so dass der Kaffee aus dem Kaffeemehlbehäfter in die Kanne einfließen kann.

Die US 2009/0120300 A1 offenbart eine Kaffeemaschine in Gestalt eines Helms mit einem zu öffnenden Visier und einer zu öffnenden Klappe, wobei der Helm eine Kaffeetasse aufzunehmen vermag, die über die Kaffeemaschine befüllt und durch das geöffnet Visier entnommen werden kann.

Die US 2008/0282896 A1 offenbart eine Kaffeemaschine mit einem Aufnahmeraum für einen Frischwassertank. Um das Einsetzen und das Herausnehmen des Tanks zu vereinfachten, weist dieser einen Griff auf.

Die bei einer Kaffeemaschine mitgelieferte Kaffeekanne besteht In der Regel aus Glas. Beim Verpacken wird die Kaffeekanne mit nach außen weisendem Handgriff in die Kaffeemaschine eingesetzt, so dass sich der Handgriff im Randbereich der Verpackung befindet. So kann es wegen der während des Transportes auftretenden Stöße bzw. Schwingungen zur Beschädigung oder Zerstörung des Handgriffs, der Drehachse des Kannendeckels oder sogar der Glaskanne kommen. Diese Gefahr wurde bisher dadurch vermieden, dass die Verpackung größer dimensioniert ist und zugleich der Handgriff mit zusätzlichen bzw. verstärkten Packmitteln verpackt wird. Damit sind unvermeidlich erhöhte Kosten verbunden, ohne dass jedoch die Probleme von Grund auf behoben würden.

Zur Lösung der genannten Probleme ist es notwendig, bekannte Kaffeemaschinen zu verbessern.

### Offenbarung der Erfindung

Die Aufgabe der vorliegenden Erfindung besteht darin, eine Kaffeemaschine mit einem Aufnahmeraum für den Handgriff der zugehörigen Kaffeekanne vorzuschlagen, mit der die Verpackung von Kaffeemaschine und Kaffeekanne vereinfacht und die Beschädigungsgefahr beim Transport vermieden werden kann.

Erfindungsgemäß wird die Aufgabe durch eine Kaffeemaschine gelöst, die ein Gehäuse umfasst, in dem ein Aufnahmeraum für eine Kaffeekanne ausgebildet ist. Im Gehäuse ist ferner eine mit dem Aufnahmeraum verbundene Aufnahmenut für den Handgriff einer Kaffeekanne vorgesehen.

Erfindungsgemäß ist die Aufnahmenut als Vertiefung der Innenwand des Aufnahmeraums im Gehäuse ausgebildet.

Erfindungsgemäß handelt es sich bei der Innenwand des Gehäuses um eine gekrümmte Fläche, wobei die Tiefenrichtung der Nut der radialen Richtung der gekrümmten Fläche entspricht.

Erfindungsgemäß entspricht die Längsrichtung der Aufnahmenut der Höhenrichtung des Gehäuses.

Im Vergleich zum Stand der Technik bietet die vorliegende Erfindung nachfolgende Vorteile: Dadurch, dass sich der Handgriff der Kaffeekanne ins Gehäuse der Kaffeemaschine einpassen lässt, müssen nur verhältnismäßig klein dimensionierte und weniger robuste Packmittel eingesetzt werden, was eine Kosteneinsparung bedeutet. Überdies ist der Handgriff der Kaffeekanne durch das Gehäuse der Kaffeemaschine in seiner Lage fixiert, so dass die Kaffeekanne nicht wegen unbeabsichtigter Bewegungen während des Transportes beschädigt wird.

### Darstellung der Abbildungen

Es zeigen
- ABB 1: in räumlicher Darstellung eine Ausführungsform einer Kaffeemaschine / Kaffeekannen-Anordnung,
- ABB 2: in räumlicher Darstellung einen Teilbereich der Kaffeemaschine gemäß ABB 1 zur Aufnahme einer Kaffeekanne,
- ABB 3: in räumlicher Darstellung die Beweglichkeit einer Abdeckplatte relativ zu einem Gehäuse bei der Kaffeemaschine gemäß ABB 1, wobei eine Ausführungsform einer zwischen Abdeckplatte und Gehäuse befindlichen Öffnungs- und Schließstruktur mit dargestellt ist, und
- ABB 4: in ähnlicher Darstellung wie ABB 3 eine weitere Ausführungsform der Öffnungs-und Schließstruktur.

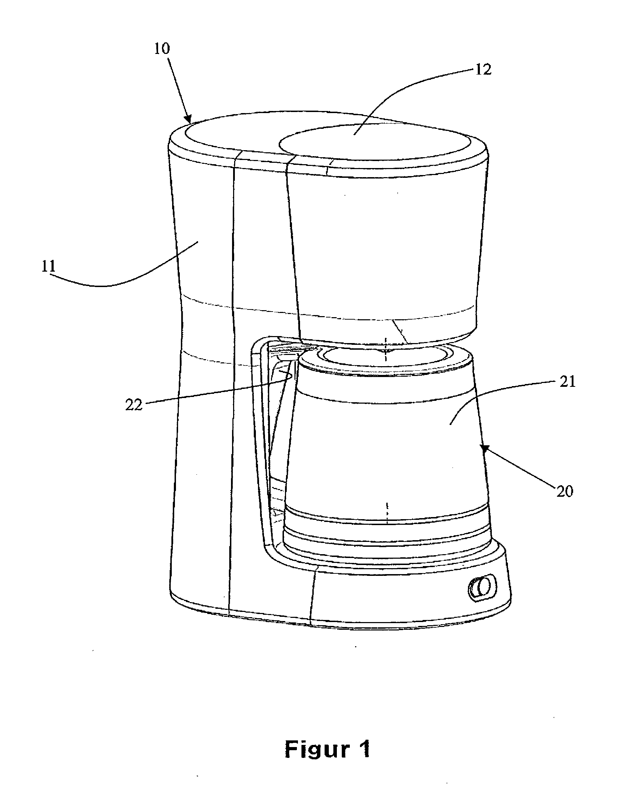

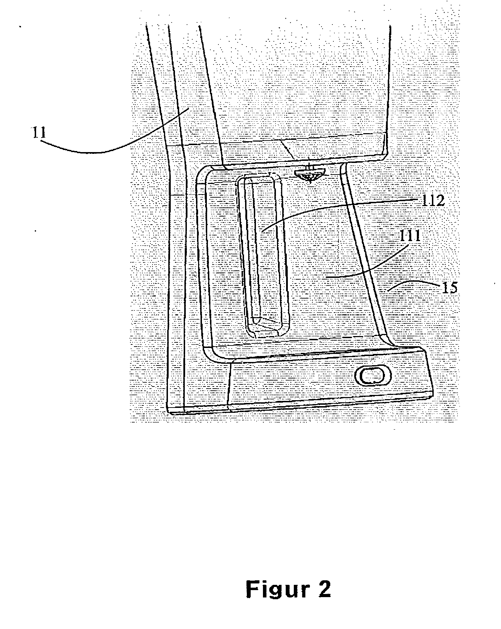

In ABB 1 ist eine Ausführungsform einer erfindungsgemäßen Kaffeemaschine und ihrer zugehörigen Kaffeekanne dargestellt. Hierbei umfasst die Kaffeemaschine 10 ein aufrecht stehendes Gehäuse 11 und eine an der Oberseite des Gehäuses 11 angeordnete Abdeckplatte 12, während die Kaffeekanne 20 einen Kannenkörper 21 und einen von einer Seitenwand des Kannenkörpers seitlich hervorragenden Handgriff 22 aufweist. Wie auch aus ABB 2 zu ersehen ist, verfügt das Gehäuse 11 in seinem unteren Bereich über einen Aufnahmeraum 15 für den Kannenkörper 21 der Kaffeekanne. Bei der sich im Aufnahmeraum befindenden Innenwand 111 des Gehäuses 11 handelt es sich um eine gekrümmte Fläche, in der eine Aufnahmenut 112 ausgebildet ist, deren Tiefenrichtung der radialen Richtung der gekrümmten Fläche und deren Längsrichtung der Höhenrichtung des Gehäuses 11 entspricht. So kann der Aufnahmeraum 15, nachdem die Kaffeekanne 20 ins Gehäuse 11 eingesetzt worden ist, zur Aufnahme des Kannenkörpers 21 der Kaffeekanne und die Aufnahmenut 112 zur Aufnahme des Handgriffs 22 der Kaffeekanne dienen. Dadurch, dass sich der Handgriff der Kaffeekanne ins Gehäuse der Kaffeemaschine einpassen lässt, müssen nur verhältnismäßig klein dimensionierte und weniger robuste Packmittel eingesetzt werden, was eine Kosteneinsparung bedeutet. Überdies ist der Handgriff der Kaffeekanne durch das Gehäuse der Kaffeemaschine in seiner Lage fixiert, so dass die Kaffeekanne nicht wegen unbeabsichtigter Bewegungen während des Transportes beschädigt wird.

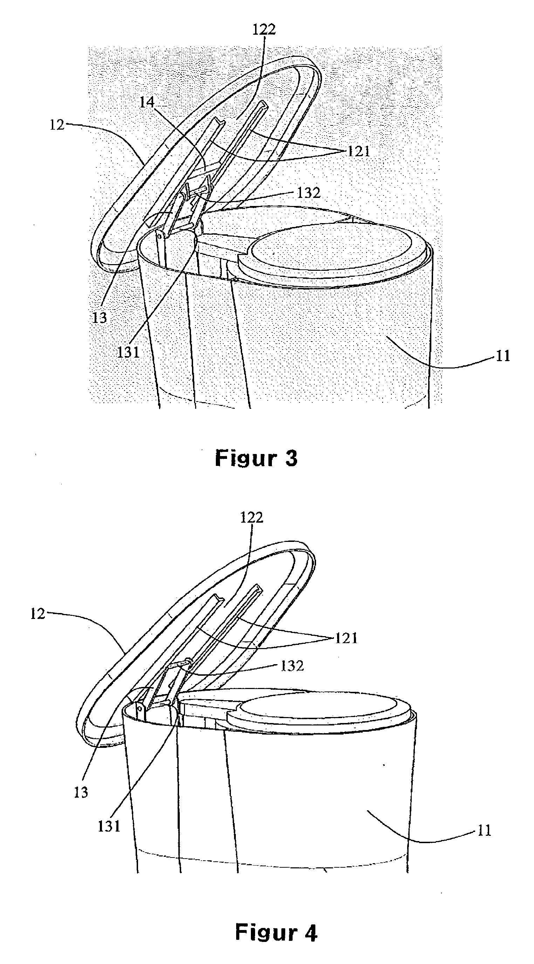

Gemäß der Ausführungsform in ABB 3 umfasst die Kaffeemaschine ferner eine zwischen Abdeckplatte 12 und Gehäuse 11 ausgebildete Öffnungs- und Schließeinheit. Diese umfasst wiederum eine fest am Gehäuse 11 angebrachte, erste Schwenkachse 131, eine zweite Schwenkachse 132, die der Abdeckplatte 12 eine Schwenkbewegung erlaubt, sowie eine die erste und zweite Schwenkachse 131, 132 verbindende Koppelstange 13. An der Innenwand der Abdeckplatte 12 sind weiterhin zwei voneinander beabstandet angeordnete Führungsschienen 121 vorhanden. Zusätzlich hierzu umfasst die Öffnungs-und Schließeinheit einen Schieber 14, der einerseits in dem Zwischenraum 122 der Führungsschienen 121 aufgenommen ist und entlang den Führungsschienen 121 gleitet. Andererseits ist der Schieber 14 fest mit der zweiten Schwenkachse 132 verbunden. Durch eine solche Anordnung kann die Abdeckplatte 12 mit einem kleinen Winkel zum Gehäuse 11 geöffnet werden und sich zugleich gegenüber dem Gehäuse 11 nach unten bewegen, so dass sich die Abdeckplatte zumindest teilweise unterhalb einer Oberkante des Gehäuses 11 befindet. Zudem nimmt der Bereich der Abdeckplatte, der unterhalb der Oberkante des Gehäuses liegt, einen umso größeren Anteil ein, je weiter die Abdeckplatte geöffnet wird. Auf diese Weise kann die Höhe, um die die Abdeckplatte über die Oberkante des Gehäuses herausragt, über den gesamten Öffnungsvorgang klein gehalten werden. Mit anderen Worten kann eine völlige Öffnung der Abdeckplatte gewährleistet werden, selbst wenn sich die Kaffeemaschine in einem vertikal begrenzten Raum befindet.

ABB 4 zeigt eine weitere Ausführungsform einer Öffnungs- und Schließeinheit für eine Kaffeemaschine, welche sich von der Ausführungsform gemäß ABB 3 im Wesentlichen dadurch unterscheidet, dass hier kein Schieber vorgesehen ist. Stattdessen erstrecken sich die beiden Enden der zweiten Schwenkachse 132 bis in die Führungsschienen 121, so dass die zweite Schwenkachse 132 entlang den Führungsschienen 121 gleiten kann. Gleichzeitig dazu kann sich die Abdeckplatte 12 auch um die zweite Schwenkachse 132 drehen. Mit dieser Ausgestaltung können die gleichen Effekte wie bei der gemäß ABB 3 ausgeführten Öffnungs- und Schließstruktur erzielt werden.

Es liegt den Fachleuchten auf diesem Gebiet nahe, dass auch die folgenden Varianten dieselbe technische Wirkung wie bei der in ABB 3 oder 4 offenbarten Ausführungsform erzielen: Es kann vorgesehen sein, dass die zweite Schwenkachse fest mit der Abdeckplatte verbunden ist, während sich die Führungsschienen am Gehäuse befinden, wobei die erste Schwenkachse dann als in den Führungsschienen verschiebbar ausgeführt ist. Darüber hinaus ist es denkbar, dass neben einer festen Verbindung zwischen erster Schwenkachse und Gehäuse auch die zweite Schwenkachse und die Abdeckplatte miteinander fest verbunden sind. Dies wirkt sich zwar nicht so gut aus wie die Ausführungsform gemäß ABB 3 oder 4, kann jedoch die Höhe der Abdeckplatte oberhalb der Oberkante des Gehäuses bei völlig geöffneter Abdeckplatte bis zu einem gewissen Grad reduzieren. Des Weiteren kann die Öffnungs- und Schließeinheit auch als Mehrgelenkgestänge ausgeführt sein, das eine kontinuierliche, richtungswechselnde Bewegung der Abdeckplatte während des Öffnens unterstützt, damit sich die Abdeckplatte zum größten Teil unterhalb der Oberkante des Gehäuses befindet. Auch dadurch lässt sich die Höhe der Abdeckplatte oberhalb der Oberkante des Gehäuses bei völlig geöffneter Abdeckplatte verringern.

Das oben Beschriebene dient lediglich der beispielhaften Darstellung möglicher Ausführungsformen der Erfindung. Trotz der vorangehenden Beschreibung und Erläuterung am Beispiel einer Filterkaffeemaschine kann die vorliegende Erfindung auch bei anderen Kaffeemaschinentypen Verwendung finden.

## Patentansprüche

1. Kaffeemaschine (10), umfassend ein Gehäuse (11), in dem ein Aufnahmeraum (15) für eine Kaffeekanne (20) ausgebildet ist, wobei im Gehäuse (11) ferner eine mit dem Aufnahmeraum (15) verbundene Aufnahmenut (112) für den Handgriff (22) der Kaffeekanne (20) vorgesehen ist, wobei die Aufnahmenut (112) als Vertiefung der Innenwand (111) des Aufnahmeraums (15) im Gehäuse (11) ausgebildet ist, **dadurch gekennzeichnet, dass** es sich bei der Innenwand (111) des Gehäuses (11) um eine gekrümmte Fläche handelt, wobei die Tiefenrichtung der Nut der radialen Richtung der gekrümmten Fläche entspricht und dass die Längsrichtung der Aufnahmenut der Höhenrichtung des Gehäuses (11) entspricht.

## Claims

1. Coffee machine (10), comprising a housing (11), in which a receiving space (15) for a coffee pot (20) is configured, a receiving channel (112) for the handle (22) of the coffee pot (20), which is connected to the receiving space (15), also being provided in the housing (11), the receiving channel (112) being configured as a recess in the inner wall (111) of the receiving space (15) in the housing (11), **characterised in that** the inner wall (111) of the housing (11) is a curved surface, the depthwise direction of the channel corresponding to the radial direction of the curved surface and the lengthwise direction of the receiving channel corresponding to the heightwise direction of the housing (11).

## Revendications

1. Percolateur (10) comprenant une carcasse (11) dans laquelle un espace de réception (15) pour une cafetière (20) est exécuté, dans lequel une rainure de réception (112) reliée à l'espace de réception (15) pour la poignée (22) de la cafetière (20) est en outre prévue dans la carcasse (11), dans lequel la rainure de réception (112) est exécutée sous la forme d'un renfoncement de la paroi intérieure (111) de l'espace de réception (15) dans la carcasse (11), **caractérisé en ce que** la paroi intérieure (111) de la carcasse (11) est une surface incurvée, dans lequel la profondeur de la rainure correspond à la direction radiale de la surface incurvée et **en ce que** le sens longitudinal de la rainure de réception correspond à la hauteur de la carcasse (11).
